# FASCICULE DE BREVET EUROPEEN

(11) **EP 0 552 078 B1**
(45) Date de publication et mention de la délivrance du brevet: **26.03.1997**
(21) Numéro de dépôt: 93400040.7
(22) Date de dépôt: 08.01.1993
(51) Int. Cl.: G06K 7/06, G06K 19/077, G07F 7/10

(54) **Carte enfichable pour microordinateur formant lecteur de carte à contacts affleurants**
Steckbare, als Lesegerät für Karten mit ebenen Kontakten verwendbare Karte für Kleinstrechner
Insertable card for microcomputer constituting a reader for cards with flat contacts

(30) Priorité: 14.01.1992 FR 9200323
(43) Date de publication de la demande: 21.07.1993
(73) Titulaire: GEMPLUS CARD INTERNATIONAL, F-13420 Gemenos (FR)
(72) Inventeur: Leroux, Jean-Yves, F-75116 Paris (FR)
(74) Mandataire: Schmit, Christian Norbert Marie

(56) Documents cités:
- EP-A- 0 323 347
- EP-A- 0 328 124
- EP-A- 0 402 182
- FR-A- 2 637 749
- ELEKTRONIK. vol. 37, no. 17, 19 Août 1988, MUNCHEN DE pages 42 - 43 'Viel Leistung - wenig Platz'

## Description

L'invention concerne les cartes à mémoire amovibles destinées à être insérées temporairement dans un lecteur de carte faisant partie d'un microordinateur (ou ordinateur personnel, ou PC, de l'anglais "personal computer"). Ces cartes sont principalement des cartes à mémoire de masse pour ordinateurs portables. Elles pourraient dans l'avenir remplacer les disquettes et autres moyens de stockage de masse de type magnétique. Elles peuvent servir de mémoire de masse d'aussi grande capacité que les disquettes magnétiques (ordre de grandeur : le million d'octets); leur encombrement n'est pas plus grand (format carte de crédit, épaisseur de 3 à 5 millimètres); elles sont beaucoup plus rapides d'accès (plusieurs milliers de fois plus rapides).

Les cartes à mémoire de masse, parfois appelées encore PC-Cards, comportent plusieurs puces de mémoire et un connecteur (connecteur femelle de 68 broches selon la norme PCMCIA de "Personal Computer Memory Card International Association" 1030B East Duane Avenue Sunnyvale, California). La carte est enfichable dans un connecteur correspondant (mâle) du microordinateur. Les connexions sont telles que la mémoire puisse être adressée par un port d'entrée-sortie parallèle du PC, soit comme si la mémoire était une mémoire de masse magnétique, soit comme si elle était une extension de mémoire vive du microordinateur.

Une telle carte à mémoire est connue par exemple du document ELEKTRONIK, vol. 37, no 17, du 19 août 1988, page 42 à 43.

Selon l'invention, on a pensé qu'il serait particulièrement intéressant d'utiliser ce type de carte comme organe principal formant lecteur de carte à puce plate à contacts affleurants (cartes telles que celles qu'on utilise principalement pour la sécurité d'accès à des locaux, pour des transactions bancaires, pour des prestations de services telles que les communications téléphoniques etc.).

C'est pourquoi l'invention propose une carte à mémoire enfichable pour microordinateur, comportant plusieurs puces de circuit-intégré et un connecteur à plusieurs dizaines de contacts enfichables en bout de carte, caractérisée en ce qu'elle comporte en outre un connecteur supplémentaire à quelques contacts affleurants sur une surface principale de la carte, ce connecteur supplémentaire étant apte à venir en contact avec une carte à puce de type carte de crédit, c'est-à-dire une carte plane dont les contacts d'accès affleurent sur une face principale.

Dans toute la suite, pour simplifier le langage, on appellera "carte à mémoire" la carte à contacts enfichable en bout et "carte de crédit" la carte à contacts affleurants, même si les fonctions générales de ces cartes ne correspondent pas à des mémoires ou à des systèmes de crédit.

La disposition est telle que la carte à mémoire de masse et la carte de crédit puissent être insérées face contre face en même temps dans un lecteur de carte à mémoire de masse; l'insertion provoque l'application du connecteur supplémentaire de la carte à mémoire de masse contre les contacts d'accès de la carte de crédit. Ou alors, la carte à mémoire de masse est déjà enfichée en place dans une fente d'un lecteur de carte d'un microordinateur et on peut insérer la carte de crédit dans l'espace qui subsiste à l'intérieur de la fente.

De cette manière, la carte à mémoire de masse sert véritablement de lecteur de carte de crédit tout en ayant un format compact et surtout en étant transportable puisque la carte à mémoire de masse est par définition une carte amovible. On obtient ainsi un lecteur de carte de crédit pour PC; ce lecteur est transportable d'un PC à un autre, et il est très commode puisqu'il peut être simplement enfiché dans le lecteur PCMCIA d'un microordinateur. Les logiciels d'application du lecteur de carte de crédit peuvent être incorporés à la carte à mémoire, celle-ci pouvant avoir de très grandes capacités de stockage non volatile.

Les puces de circuit intégré de la carte à mémoire serviront en particulier à établir le dialogue avec la carte de crédit. Ce dialogue pourra être contrôlé ou non par le microordinateur.

La présence simultanée des deux cartes dans le même lecteur suppose que l'épaisseur totale des deux cartes soit compatible avec la hauteur de la fente d'insertion du lecteur. Etant donné que cette fente est de l'ordre de 5 millimètres, et que la carte de sécurité a une épaisseur qui peut être inférieure à 1 millimètre, on prévoira simplement que la carte à mémoire a une épaisseur inférieure à la largeur de la fente, dans la zone où les cartes sont face contre face.

Le connecteur supplémentaire de la carte sera de préférence en légère surépaisseur par rapport à la face de la carte sur laquelle il est situé, de manière à venir facilement en contact avec les contacts de la carte de crédit lorsque celle-ci sera appliquée contre lui dans le lecteur. Le plafond exerce alors naturellement un effet de maintien.

Selon un autre aspect de l'invention, on verra que l'invention peut servir à sécuriser les cartes à mémoires de masse qui contiennent des données qu'on voudrait protéger en lecture et/ou en écriture.

En d'autres mots, la carte de crédit sera alors une carte de sécurité qui va servir à contrôler l'accès à la mémoire de masse, mais au lieu que cette carte de sécurité dialogue directement avec le microordinateur, elle dialoguera avec la carte à mémoire de masse dont elle doit assurer la sécurité. En l'absence de la carte de sécurité, l'accès à la mémoire de masse (ou au moins à certaines parties de celles-ci, soit en lecture soit en écriture) sera interdit : l'utilisateur n'y aura pas accès à partir du microordinateur. Et l'interdiction sera réalisée par les circuits électroniques de la carte à mémoire de masse elle-même et non pas par le microordinateur, ce qui offre une sécurité bien plus grande.

D'autres caractéristiques et avantages de l'invention apparaîtront à la lecture de la description détaillée qui suit et qui est faite en référence aux dessins annexés dans lesquels :
- la figure 1 représente une vue générale en perspective de la carte enfichable selon l'invention, formant lecteur de carte de crédit à contacts affleurants;
- la figure 2 représente une vue semblable à la figure 1, avec une carte de crédit mise en place sur la carte à mémoire enfichable;
- la figure 3 représente une coupe transversale des deux cartes mises en place dans un lecteur de carte à mémoire de PC.

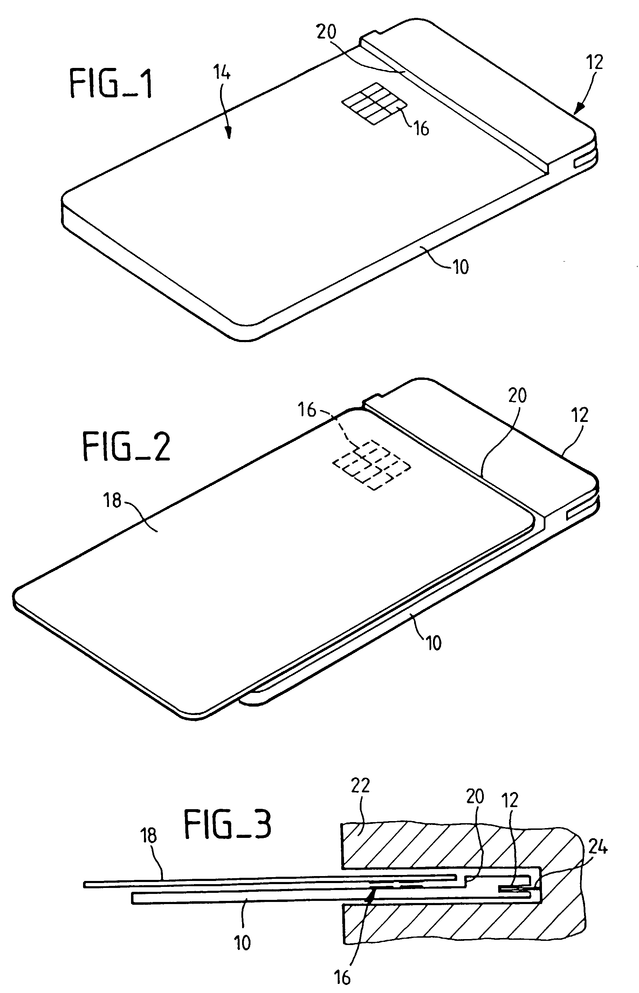

La figure 1 représente une carte à mémoire de masse selon l'invention. Par carte à mémoire de masse on entendra généralement une carte comportant plusieurs puces de circuit intégré, et un connecteur à multiples broches en bout de carte. Typiquement, la norme PCMCIA définit de telles cartes avec 68 contacts de sortie pour des dimensions de cartes d'environ 5 centimètres par 8 centimètres et une épaisseur d'environ 3 à 5 millimètres. Il s'agit donc d'une carte essentiellement plane ayant deux faces principales parallèles.

La carte est désignée par la référence 10. Le connecteur est en bout sur un petit côté de la carte et il est désigné par 12. C'est en principe un connecteur femelle. Il est enfichable dans un connecteur mâle correspondant d'un lecteur de carte faisant partie d'un microordinateur ou connecté à un microordinateur.

Selon l'invention, on prévoit sur une des deux faces principales de la carte, par exemple la face 14 située au dessus sur la figure 1, un connecteur supplémentaire 16 , qui est à contacts affleurants. Il ne s'agit donc pas d'un connecteur enfichable comme le connecteur 12. C'est au contraire un connecteur constitué par plusieurs contacts s'étendant tous parallèlement au plan de la surface supérieure 14 de la carte, de préférence légèrement en saillie par rapport à ce plan. Plus précisément, le connecteur est conçu et placé de telle manière qu'il puisse venir en contact avec les différents contacts d'une carte à puce du type carte de crédit à contacts affleurants lorsqu'une telle carte est placée contre la face principale 14. Le contact se fait par simple pression quand les cartes sont appliquées l'une contre l'autre.

Typiquement, selon les normes actuelles, les cartes à puces de type cartes de crédit ont un connecteur à huit contacts plans affleurants sur une face principale de la carte. La norme ISO 7816 par exemple définit les formes et positions de ces contacts. La carte de crédit a des dimensions très similaires (ordre de grandeur 5 x 8 cm de côté) à celles de la carte à mémoire, et une faible épaisseur (de l'ordre du millimètre).

La figure 2 représente une vue analogue à la figure 1, mais dans laquelle une carte de crédit 18 a ainsi été mise en place. On notera que de préférence la carte 10 a la même largeur que la carte de crédit 18 (par exemple 5,4 cm). Cette largeur correspond à la largeur de la fente d'insertion dans laquelle sera introduite la carte 10 dans le lecteur de l'ordinateur. Les deux cartes pourront être insérées dans cette fente si elles sont correctement superposées; et dans cette position les contacts d'accès de la carte de crédit 18 sont connectés électriquement au connecteur de la carte 10.

De préférence, l'extrémité de la carte à mémoire 10 (du côté du connecteur 12) est plus épaisse que le reste de la carte; la carte de crédit 18 peut venir en butée contre un bord 20 séparant la partie plus épaisse de la partie moins épaisse; ce bord est parallèle à un petit bord des cartes; d'autre part l'épaisseur additionnée de la carte 10 et de la carte 18 est sensiblement égale à l'épaisseur de la partie plus épaisse de la carte 10; en tout cas cette épaisseur cumulée ne dépasse pas la hauteur de la fente dans laquelle seront insérées les deux cartes.

On a ainsi réalisé une carte 10 qui, lorsqu'elle est insérée dans un lecteur de carte peut constituer un lecteur de carte de crédit à contacts affleurants, avec la particularité qu'elle est très facilement transportable pour être installée dans n'importe quel microordinateur.

La figure 3 représente en coupe les deux cartes insérées dans un lecteur de carte à mémoire de masse 22. Ce lecteur 22 comporte un connecteur 24 dans lequel peut s'enficher le connecteur 12. Lorsque la carte 10 est en place dans ce lecteur, elle sert elle-même de lecteur de carte pour une carte 18 de type carte de crédit à contacts affleurants.

On n'a pas représenté sur les figures des particularités de construction envisageables, telles qu'un détecteur de carte, mécanique, électrique ou optique sur la carte 10 : un tel détecteur peut être utile dans le cas où les programmes de fonctionnement de la carte à mémoire 10 exécutent en permanence une boucle d'attente d'insertion de carte 18. On peut en effet prévoir que le fonctionnement principal de la carte, voire même du microordinateur n'est pas autorisé (à l'exception de quelques programmes) tant qu'une carte 18 n'est pas insérée.

Cette structure de lecteur de carte de crédit est particulièrement intéressante du fait des grandes capacités de traitement des cartes à mémoire actuelles du type PCMCIA. En effet, que ce soient grâce à des capacités de mémoire (plusieurs centaines ou milliers de mégaoctets) ou à des capacités de traitement proprement dites (microprocesseurs), les cartes peuvent comporter tous les logiciels d'application leur permettant alors d'avoir toutes les fonctionnalités d'un lecteur de carte de crédit dès lors qu'elles sont alimentées en énergie. Le microordinateur qui les reçoit va servir à assurer l'interface avec l'utilisateur, grâce à son clavier et son écran, et il peut par ailleurs piloter les systèmes dont le fonctionnement doit être placé sous le contrôle de la carte de crédit. La carte de crédit peut être une carte d'habilitation (carte de sécurité) autorisant l'usage du microordinateur.

Dans le premier aspect de cette invention, la carte à mémoire 10 a pour fonction principale de constituer un lecteur de carte à contacts affleurants, ce lecteur étant amovible par nature, de la même manière qu'une disquette magnétique est amovible. Dans ce cas, les mémoires et autres puces de circuit intégré de la carte sont dédiés à cet usage, c'est-à-dire que la carte comporte par exemple un microprocesseur qui gère les protocoles de communication avec le connecteur 16 et des mémoires contenant les programmes de fonctionnement de ce microprocesseur et les programmes d'interfaçage avec l'ordinateur par le connecteur 12.

Dans un autre aspect de l'invention, étant donné les capacités de mémoire et de traitement élevées des cartes PCMCIA, la circuiterie servant à transformer la carte 10 en lecteur de cartes à contacts affleurants n'est qu'un aspect auxiliaire du fonctionnement de la carte à mémoire. La carte possède des fonctions principales destinées à être accomplies sous contrôle de l'ordinateur, et la fonction de lecteur de carte de crédit est une fonction parmi ces fonctions.

Pour terminer cette description, on va montrer comment l'invention peut servir tout particulièrement dans ce dernier cas à assurer la protection du contenu de la carte à mémoire de masse elle-même.

Selon un aspect de l'invention, on a en effet pensé qu'il serait souhaitable de sécuriser autant que possible les cartes à mémoire de masse pour microordinateurs personnels. En effet, leur grande capacité fait qu'elles peuvent contenir soit des bases de données importantes méritant d'être protégées en lecture comme en écriture, soit des programmes coûteux qu'on ne souhaite pas voir utiliser ou dupliquer sans autorisation; ou enfin, elles peuvent servir à assurer des transactions confidentielles selon des programmes plus sophistiqués que ceux qui existent actuellement, ou impliquant des quantités de données plus importantes que ce que peuvent stocker les simples cartes à puces de transactions sécurisées qui ne comportent qu'une puce.

Par conséquent, on pourra prévoir, avec la structure selon l'invention, que la carte à mémoire de masse comporte des programmes de gestion de sécurité; ces programmes interdisent l'utilisation de la carte à mémoire si d'une part une carte de sécurité à contacts affleurants n'est pas présente dans le lecteur de carte en même temps que la carte à mémoire, et si d'autre part le dialogue entre la carte à mémoire, la carte de sécurité, et l'utilisateur du microordinateur, fait apparaître que l'utilisateur n'est pas le titulaire habilité de la carte de sécurité correspondant à ce que la carte à mémoire attend. Par l'expression "carte de sécurité", on entend ici une carte apte à vérifier une habilitation ou à crypter des données d'une manière impossible ou quasi-impossible à frauder. Une carte contenant un code confidentiel et des moyens de vérification du code introduit au clavier par l'utilisateur est un exemple de carte de sécurité.

Par conséquent, on peut grâce à l'invention imaginer le protocole de fonctionnement suivant : une carte à mémoire est insérée dans le lecteur du microordinateur; cette opération déclenche un protocole de communication permettant au microordinateur de dialoguer partiellement avec la carte; l'insertion d'une carte de sécurité est demandée à l'écran; si une carte de sécurité n'est pas introduite, l'utilisation normale de la carte à mémoire ne sera pas possible; si une carte de sécurité est introduite, un dialogue s'établit entre celle-ci et la carte à mémoire, cette dernière contrôlant la situation; un mot de passe est demandé à l'écran; le mot de passe est introduit par l'utilisateur au clavier; ce mot de passe est reçu par la carte à mémoire qui le transmet directement, ou mieux encore sous forme chiffrée, à la carte de sécurité; celle-ci exécute les opérations de vérification nécessaires sur le mot de passe; si le mot de passe n'est pas correct, le signal renvoyé par la carte de sécurité est lu par la carte à mémoire comme une interdiction de fonctionnement normal; elle bloque donc les parties de circuits ou de mémoires qui doivent rester protégées; l'autorisation de fonctionnement normal de la carte n'est pas donnée par la carte au PC : la carte se protège elle-même contre une utilisation non autorisée; si le mot de passe est correct, l'autorisation est donnée. L'autorisation peut être générale une fois que le mot de passe a été donné, ou peut être partielle selon le degré d'habilitation auquel donne droit le mot de passe.

On voit qu'une protection sophistiquée peut être obtenue sur le contenu de la carte : d'une part on peut protéger tout ou partie de la carte, en lecture comme en écriture; d'autre part, le fabricant de carte peut prévoir qu'il y a correspondance entre la carte à mémoire et une carte de sécurité spécifique associée; dans ce dernier cas, le fonctionnement de la carte peut n'être autorisé que si non seulement l'utilisateur possède un mot de passe mais aussi si la carte de sécurité est bien celle qui est attendue; on peut prévoir aussi une habilitation si une seule de ces conditions seulement est remplie.

On aura compris que la carte à mémoire est protégée sans que le dialogue de vérification de la sécurité passe par le microordinateur, ce qui est avantageux.

On a ainsi donné un exemple particulièrement important de l'utilisation qu'on peut faire de l'invention. Jusqu'à maintenant les cartes à mémoire de masse ne pouvaient pas être protégées, et seuls les microordinateurs pouvaient être protégés globalement, sans que leurs différents lecteurs de mémoires de masse puissent être protégés individuellement, et surtout sans que les contenus de ces mémoires de masse puissent être protégés dès lors qu'elles étaient insérées dans un microordinateur non protégé.

Le circuit intégré qu'on insère dans une telle carte de sécurité est de préférence une puce unique comportant une mémoire non volatile avec des informations confidentielles qui ne peuvent pas être transmises sur les bornes extérieures du circuit-intégré, et une circuiterie de sécurité programmée; cette circuiterie est apte à utiliser ces informations confidentielles et d'autres informations fournies par l'utilisateur, pour délivrer des instructions de validation après vérification d'une relation prédéterminée entre ces deux types d'information; les données confidentielles ne sortent pas à l'extérieur du circuit intégré.

La puce de sécurité comporte elle-même éventuellement un microprocesseur et des mémoires, avec parmi ces mémoires des mémoires non volatiles programmables électriquement et éventuellement effaçables électriquement. Le programme de fonctionnement de ce microprocesseur est en principe enregistré dans une mémoire morte de la puce; mais il peut être également partiellement enregistré dans une mémoire non volatile. Le contenu de certaines au moins des mémoires non volatiles n'est pas accessible en lecture sur les bornes extérieures de la puce. Ce contenu est utilisé exclusivement par le microprocesseur pour ses besoins propres, et notamment pour l'exécution de programmes de sécurité faisant intervenir des codes secrets placés dans ces mémoires inaccessibles. A titre d'exemple, le circuit intégré ST16612 vendu par SGS-THOMSON, auquel est incorporé le programme de mémoire non volatile MCOS de GEMPLUS, peut convenir.

Dans un autre exemple la carte de crédit est d'un format plus petit, par exemple au format dit PLUG-IN, défini pour l'utilisation en Téléphonie Cellulaire Européenne (norme G.S.M.). Dans ce cas la carte à mémoire où au moins son support 10 ne comporte qu'une cavité de dimension adaptée, de préférence là ou une puce mémoire n'a pas été placée. Cette cavité ne possède qu'une ouverture supérieure. Elle ne débouche pas à l'arrière de la carte à mémoire. Cette cavité est munie dans son fond d'un connecteur pour venir au contact des métallisations de la carte PLUG-IN qui y est placée. Un autre avantage de cette solution est que son intégration la rend plus solide, en particulier parce que la carte ne déborde pas. L'arrachement de la carte à puce PLUG-IN est en effet impossible sans arracher la carte à mémoire elle-même. Ceci empêche toute violation, l'application s'arrêtant immédiatement si celle-ci est retirée. De plus, l'espionnage des contacts de la carte à puce devient quasiment impossible.

## Revendications

1. Carte à mémoire enfichable (10) pour microordinateur, comportant plusieurs puces de circuit-intégré et un connecteur (12) à plusieurs dizaines de contacts enfichables en bout de carte, caractérisée en ce qu'elle comporte en outre un connecteur supplémentaire (16) à quelques contacts affleurants sur une surface principale (14) de la carte, ce connecteur supplémentaire étant apte à venir en contact avec une carte à puce (18) plane dont les contacts d'accès affleurent sur une face principale.

2. Carte à mémoire enfichable pour microordinateur , selon la revendication 1, caractérisée en ce que le connecteur supplémentaire a des contacts légèrement en saillie par rapport à la surface principale (14) de la carte enfichable.

3. Carte à mémoire enfichable selon l'une des revendications 1 et 2, caractérisée en ce qu'elle comporte des moyens électroniques pour dialoguer avec une carte de sécurité à contacts affleurants placée en contact avec le connecteur supplémentaire, et des moyens pour protéger l'accès à la carte enfichable à partir d'un ordinateur dans lequel elle est enfichée, en fonction des résultats du dialogue.

4. Carte à mémoire selon l'une des revendications 1 à 3 caractérisée en ce qu'elle est enfichée dans un réceptacle qui comporte des flancs latéraux pour guider en même temps la carte à mémoire et la carte à puce.

5. Carte à méméoire selon l'une quelconque des revendications 1 à 4 caractérisée en ce qu'elle comporte une cavité pour recevoir une carte à puce de dimension réduite.

## Patentansprüche

1. Speichersteckkarte (10) für einen Kleinrechner, die mehrere Chips mit integrierten Schaltkreisen und einen Anschluß (12) mit mehreren Dutzenden von Steckkontakten am Ende der Karte umfaßt,
dadurch gekennzeichnet, daß
sie außerdem einen zusätzlichen Anschluß (16) mit einigen Kontakten, die auf einer Hauptfläche (14) der Karte hervortreten, umfaßt, wobei der zusätzliche Anschluß dazu geeignet ist, Kontakt mit einer ebenen Chipkarte (18) herzustellen, deren Zugangskontakte auf einer Hauptfläche hervortreten.

2. Speichersteckkarte für einen Kleinrechner nach Anspruch 1, dadurch gekennzeichnet, daß der zusätzliche Anschluß gegenüber der Hauptfläche (14) der Steckkarte leicht hervortretende Kontakte umfaßt.

3. Speichersteckkarte nach einem der Ansprüche 1 und 2, dadurch gekennzeichnet, daß sie elektronische Vorrichtungen für die Kommunikation mit einer Sicherheitskarte mit hervortretenden Kontakten, die in Kontakt mit dem zusätzlichen Anschluß angeordnet ist, und Vorrichtungen zum Schutz des Zugriffs auf die Steckkarte von einem Rechner, in welchen sie eingeführt ist, in Abhängigkeit von Kommunikationsergebnissen umfaßt.

4. Speicherkarte nach einem der Ansprüche 1 bis 3, dadurch gekennzeichnet, daß sie in eine Aufnahme gesteckt wird, die seitliche Flanken umfaßt, um gleichzeitig die Speicherkarte und die Chipkarte zu führen.

5. Speicherkarte nach einem der Ansprüche 1 bis 4, dadurch gekennzeichnet, daß sie einen Hohlraum für die Aufnahme einer Chipkarte mit verkleinerten Abmessungen umfaßt.

## Claims

1. A plug-in memory card (10) for a micro-computer, having several integrated circuit chips and a connector (12) with several tens of plug-in contacts at the end of the card, characterised in that it also has an additional connector (16) with several contacts flush with a main surface (14) of the card, this additional connector being designed to be placed in contact with a flat chip card (18), the access contacts of which are flush with a main face.

2. A plug-in memory card for a micro-computer as claimed in claim 1, characterised in that the additional connector has contacts that project slightly above the main surface (14) of the plug-in card.

3. A plug-in memory card as claimed in one of claims 1 and 2, characterised in that it has electronic means for conducting a dialogue with a security card having flush contacts that are placed in contact with the additional connector and means to protect access to the plug-in card from a computer into which it has been inserted depending on the results of the dialogue.

4. Memory card as claimed in one of claims 1 to 3, characterised in that it is plugged into a receptacle having lateral edges to guide the memory card and the chip card simultaneously.

5. Memory card as claimed in any one of claims 1 to 4, characterised in that it has a cavity to receive a chip card of a smaller dimension.
